# EUROPÄISCHE PATENTSCHRIFT

(11) **EP 0 441 994 B1**
(45) Veröffentlichungstag und Bekanntmachung des Hinweises auf die Patenterteilung: **27.04.1994**
(21) Anmeldenummer: 90102696.3
(22) Anmeldetag: 12.02.1990
(51) Int. Cl.: C05F 17/02, B01F 7/00

(54) **Verfahren und Vorrichtungen zur wenigstens teilweisen biologischen Umwandlung organischer Stoffe in Biomasse**
Process and apparatus for at least partial biological conversion of organic material into biomass
Procédé et appareil de transformation biologique au moins partiellement de matières organiques en biomasse

(43) Veröffentlichungstag der Anmeldung: 21.08.1991
(73) Patentinhaber: Böhnensieker, Franz, D-59320 Ennigerloh (DE)
(72) Erfinder: Böhnensieker, Franz, D-59320 Ennigerloh (DE)
(74) Vertreter: Schmidt, Horst, Dr.

(56) Entgegenhaltungen:
- EP-A- 0 253 702
- DE-A- 3 104 769
- DE-A- 3 626 902
- DE-C- 3 442 058
- DE-C- 3 800 201
- DE-C- 3 837 865
- FR-A- 1 148 660
- FR-A- 2 632 827
- US-A- 3 682 396
- US-A- 4 432 499

## Beschreibung

Die Erfindung betrifft Verfahren und Vorrichtungen zur wenigstens teilweisen biologischen Umwandlung organischer Stoffe in Biomasse.

Bekanntlich können organische Stoffe, insbesondere Haushaltsabfall, Abfall aus landwirtschaftlichen oder kommunalen Betrieben und dgl., in wiederverwendbare wertvolle Biomasse auf aerobem oder anaerobem Weg umgewandelt (kompostiert) werden. Die vorliegende Erfindung bezieht sich auf die aerobe Umwandlung. Deren zeitlicher Verlauf ist wesentlich von den Bedingungen (Temperatur, Feuchtigkeit, Luftzufuhr und dgl.) bestimmt, unter denen die Umwandlung stattfindet. Zumeist erfolgt die Kompostierung chargenweise, d.h. diskontinuierlich in einer geschlossenen Umgebung (vgl. z.B. DE-C-34 42 058), da sich darin die Umwandlungsbedingungen am ehesten optimieren lassen. Nachteil dieser Vorgehensweise ist, dass bei jeder Charge der Prozess eine Startphase, Hauptreaktionsphase und eine Endphase durchlaufen muss, und daher für die Umwandlung eine beträchtlich lange Zeit benötigt wird. Diese Art der Prozessführung eignet sich daher in erster Linie für die Verarbeitung grösserer Abfallmengen in stationären Anlagen. Weiter ist es bei der gleichzeitigen Kompostierung von im wesentlichen trockenem Haushaltsabfall und nassem Klärschlamm bekannt (vgl. DE-A-29 44 519), kontinuierlich den Klärschlamm und den zerkleinerten Haushaltsabfall in einen Reaktionsbehälter einzugeben und darin unter Frischluftzufuhr miteinander zu vermischen. Die Frischluftzufuhr wird in Abhängigkeit von der im Reaktionsbehälter herrschenden Temperatur reguliert. Bekannt ist ferner (DE-A-31 04 769) eine fahrbare Kompostierungsanlage mit einem um seine Längsachse drehbaren Reaktionsbehälter mit integrierter Förderschnecke zur Bewegung des Gutes von einem Ende des Behälters zum anderen Ende und mit einer Fördereinrichtung, die wiederholt das Gut zurück zum einen Ende des Reaktionsbehälters transportieren kann. Die bekannte Vorrichtung erlaubt keine Verfahrensführung, die hinsichtlich Temperatur/Feuchtigkeit/Frischluftkonditionierung optimale Verhältnisse für eine möglichst rasche Umwandlung des eingegebenen Gutes schafft.

Der Erfindung liegt die Aufgabe zugrunde, Verfahren und Vorrichtungen der eingangs erwähnten Gattung zu schaffen, die aufgrund einer verkürzten Zeit für die Verarbeitung des eingegebenen Gutes geeignet sind, auch für geringere Abfallmengen und damit, wenn erwünscht, am Ort der Abfallentstehung in wirtschaftlicher Weise eingesetzt bzw. praktiziert zu werden.

Gemäss einem Aspekt der Erfindung ist dadurch ein Verfahren geschaffen, das sich durch die Merkmale des Patentanspruches 1 auszeichent. Danach werden die organischen Stoffe in einem ersten Schritt in einer für die nachfolgende Umwandlung förderlichen Weise aufbereitet, insbesondere feinzerkleinert und vermischt. Die Aufbereitung findet in einem geschlossenen umwandlungsförderlichen Gehäuse unter Frischluftzufuhr statt, so dass schon während der Aufbereitungsphase die Umwandlungsreaktion einsetzen kann, was die nachfolgende Reaktion im Reaktionsbehälter verkürzt, indem die Startphase im wesentlichen wegfällt und im Reaktionsbehälter kontinuierlich die für eine optimale rasche Umwandlung geeigneten Bedingungen eingehalten werden können. Dabei ist es aus der DE-A-36 26 902 grundsätzlich bekannt, einem trommelförmigen rotierenden Reaktionsbehälter eine Zerkleinerungseinrichtung zur Zerkleinerung des Gutes vor dessen Eingabe in den Reaktionsbehälter vorzuschalten. Weil die Zerkleinerung in einer offenen Umgebung stattfindet und auch andere erfindungsgemässe Verfahrensbedingungen während der vorgeschalteten Behandlung nicht eingehalten werden, ist die bekannte Einrichtung nicht geeignet, das Gut im Sinne der Erfindung in einer Art und Weise aufzubereiten, dass die Startphase im eigentlichen Reaktionsbehälter wegfallen kann.

Eine weitere Verkürzung der Umwandlungszeit kann erfindungsgemäss dadurch erreicht werden, dass die für die Reaktion erforderliche Frischluft im vorerwärmten Zustand in den Prozess eingeführt wird. Da der Prozess exotherm abläuft, kann die Prozesswärme zur Erwärmung der Frischluft unter entsprechender Energieeinsparung herangezogen werden kann. Wird ferner die Frischluft mit Überschuss zugeführt, kann mittels der überschüssigen erwärmten Abluft Feuchtigkeit aus dem Inneren des Reaktionsbehälters und/oder der Aufbereitungsvorrichtung abgeführt und damit eine gezielte Trocknung des darin befindlichen Gutes vorgenommen werden.

Die Vorrichtung zur Durchführung des vorbeschriebenen Verfahrens ist Gegenstand des Patentanspruches 4. Die Vorrichtung eignet sich wegen des kompakten Aufbaues insbesondere auch für einen mobilen Einsatz durch Anordnung auf einem Fahrgestell, so dass eine wirtschaftliche Entsorgung der Abfallstoffe am Ort ihres Entstehens möglich ist.

Gemäss einem anderen Aspekt der Erfindung wird durch diese ein Verfahren geschaffen, das durch die Merkmale des Patentanspruches 7 gekennzeichnet ist. Danach erfolgt erfindungsgemäss das Mischen und Zerkleinern in einem stationären, wärmeisolierten Gehäuse uzw. in dessen Bereich tieferen Niveaus bzw. im Bereich des Gehäusesumpfes, und wird das Gut bei Erreichen eines Gehäusebereiches höheren Niveaus frei im Gehäuse zum Bereich tieferen Niveaus zurückfallen gelassen. Dadurch wird sichergestellt, dass ständig neue Oberflächen des Gutes den im Gehäuse herrschenden Umwandlungsbedingungen ausgesetzt werden. Die Aufbereitung geht daher schon mit einer wenigstens teilweisen Umwandlung des eingegebenen Gutes einher. Ggf. kann die Umwandlung bei der Aufbereitung bis zu einer Stufe fortschreiten, die eine nachfolgende Behandlung des Gutes in einem Reaktionsdrehbehälter überflüssig macht.

Die Vorrichtung zur Durchführung des Verfahrens gemäss dem anderen Aspekt der Erfindung ist Gegenstand des Patentanspruches 11. Die Vorrichtung hat aufgrund ihrer im wesentlichen vertikalen Ausrichtung einen besonders kompakten platzsparenden Aufbau und eignet sich daher vor allem für die Verarbeitung kleinerer Abfallmengen, z.B. bei Gaststätten und dgl..

Bezüglich Weiterbildungen der Erfindung wird auf die Patentansprüche verwiesen.

Die Erfindung wird nachfolgend anhand von Ausführungsformen und der Zeichnung näher erläutert. Es zeigen:
Fig. 1 in schematischer perspektivischer Ansicht eine mobile Umwandlungsvorrichtung nach der Erfindung mit getrenntem Aufbereitungs- und Reaktionsbereich,
Fig. 2 in perspektivischer weggebrochener Ansicht eine erfindungsgemässe Aufbereitungsvorrichtung mit Umwandlungsvermögen,
Fig. 3 in schematischer längsgeschnittener Ansicht einen Reaktionsbehälter,
Fig. 4 ein Schemaschaubild einer Einrichtung zur Erwärmung von Frischluft unter Ausnutzung von Prozesswärme.

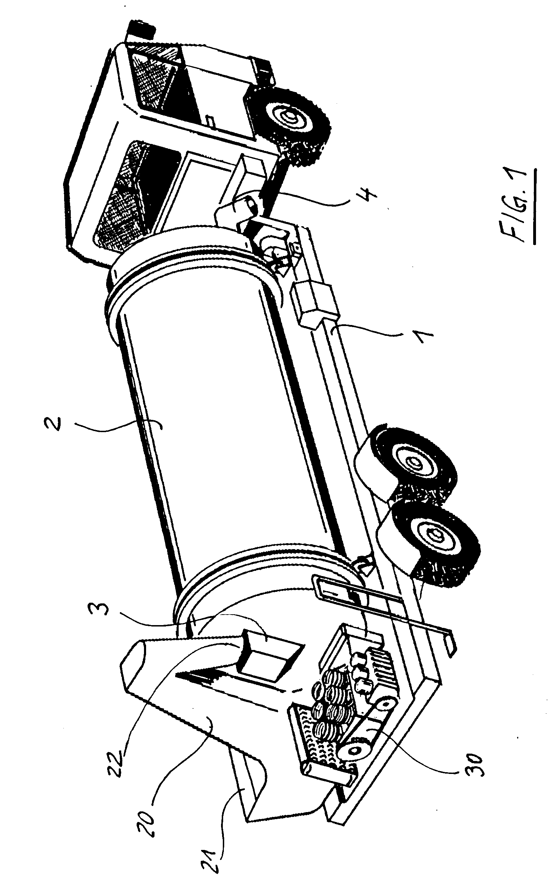

Nach Fig. 1 umfasst die erfindungsgemässe Umwandlungsvorrichtung gemäss einer Ausführungsform einen um eine horizontale oder annähernd horizontale Längsachse drehbaren trommelförmigen Reaktionsbehälter 2 sowie eine als getrennte Baueinheit ausgebildete Aufbereitungsvorrichtung 20. Wie dargestellt, kann die Umwandlungsvorrichtung, bestehend aus dem Reaktionsbehälter 2 und der Aufbereitungsvorrichtung 20 sowie ggf. weiteren Aggregaten, auf einem Fahrgestell 1 (Hänger oder Lkw) angeordnet sein, so dass sie als mobile Anlage von Einsatzort zu Einsatzort bewegt werden kann.

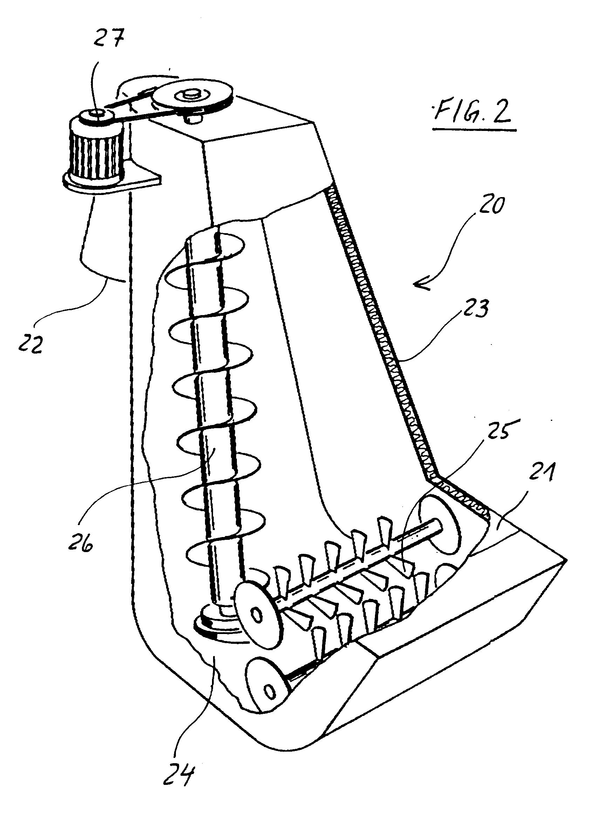

Fig. 2 zeigt den Aufbau der Aufbereitungsvorrichtung 20 gemäss einer bevorzugten Ausführungsform der Erfindung, bei der die Aufbereitung mit einer wenigstens teilweisen Umwandlung des eingegebenen Gutes in Biomasse kombinierbar ist. Die Vorrichtung umfasst ein wärmeisoliertes Gehäuse 23 mit einem unteren mit einer Einlassöffnung 21 versehenen Gehäusebereich, einem nach oben sich erstreckenden Zwischenbereich und einem oberen Gehäusebereich mit einer Auslassöffnung 22, die demzufolge auf einem geeignet höheren Niveau als die Einlassöffnung 21 liegt.

Im unteren Gehäusebereich ist ein Mahl- und Mischwerk 25 angeordnet, das ein Paar zusammenwirkende mit unterschiedlicher Drehgeschwindigkeit gegenläufig antreibbare Mahlwalzen mit einer Vielzahl radial abstehender Misch- und Zerkleinerungselemente umfasst. Die Mahlwalzen sind daher geeignet, auf das zu behandelnde Gut gezielt entweder im wesentlichen nur eine zerkleinernde oder im wesentlichen nur mischende Wirkung auszuüben, je nachdem, mit welcher Drehzahl der Antrieb der Mahlwalzen erfolgt. Bei hohen Drehzahlen überwiegt die zerkleinernde Wirkung der Mahlwalzen, während diese bei niedrigerer Drehzahl die mischende Funktion dominiert. Es versteht sich, dass, wenn erwünscht, auch andere geeignete Zerkleinerungs- und Mischeinrichtungen vorgesehen werden können.

Nicht dargestellt sind ferner Mittel zur Erfassung des durch die Wirkung des Mahl- und Mischwerkes 25 erzielten Zerkleinerungsgrades des eingegebenen Gutes. Die Erfassung des Zerkleinerungsgrades kann z.B. über eine Messung des für den Antrieb der Mahlwalzen benötigten Drehmomentes erfolgen. Unterhalb des Mahl- und Mischwerkes 25 ist ein Sumpf 24 im Gehäuse 23 ausgebildet, in den das zerkleinerte Gut fällt. Eine schräg nach oben sich erstreckende Fördereinrichtung in Gestalt z.B. einer Förderschnecke 26 ist vorgesehen, um das zerkleinerte Gut aus dem Sumpf 24 zur Auslassöffnung 22 zu transportieren. Die Förderschnecke 26 kann durch einen bei 27 angedeuteten Antrieb mit variabler Geschwindigkeit in Drehbewegung versetzt werden. Die Auslassöffnung 22 kann durch ein geeignetes, vorzugsweise servogesteuertes Schliessorgan (nicht gezeigt), z.B. einen Schieber oder dgl., geschlossen oder geöffnet werden.

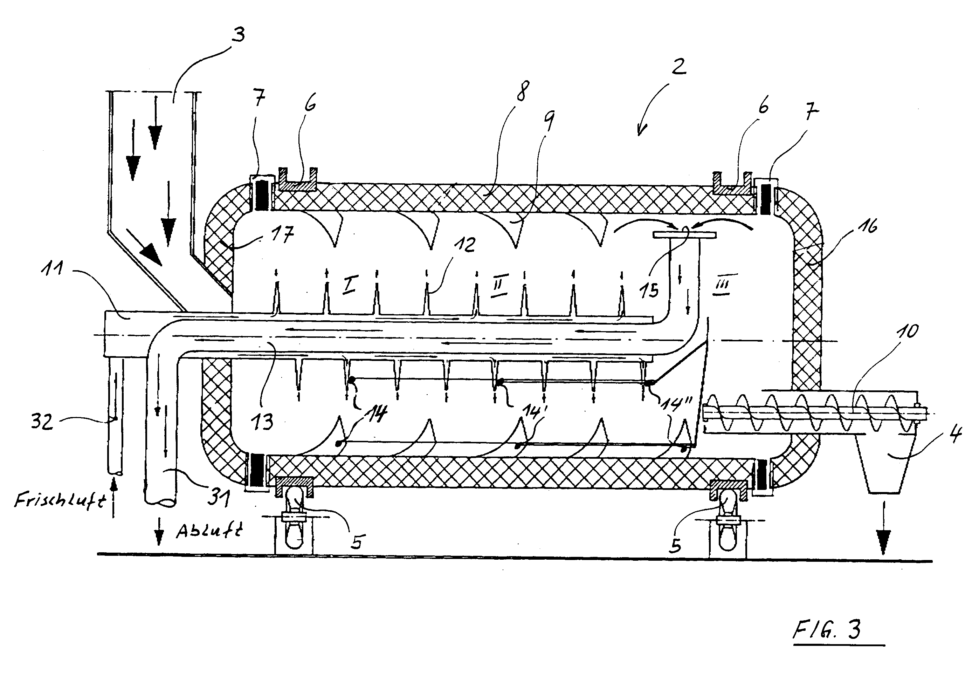

Ferner ist eine Einrichtung (nicht gezeigt) vorgesehen, um Frischluft in das Gehäuse 23 ein- und die Abluft daraus abzuführen. Die Einrichtung kann in Gestalt einer Koaxialrohranordnung ausgebildet sein, wie sie in Verbindung mit einer Beschreibung von Fig. 3 näher erläutert wird.

Die vorbeschriebene und in Fig. 2 gezeigte Aufbereitungsvorrichtung kann alleine oder gemäss Fig. 1 in Kombination mit einem Reaktionsbehälter verwendet werden, wie er im Detail anhand von Fig. 3 nachfolgend beschrieben wird.

Der Reaktionsbehälter 2 umfasst einen drehbaren langgestreckten trommelförmigen Gehäusemittelteil 8, dessen Stirnseiten durch Endteile 16 und 17 verschlossen sind. Im Gegensatz zum trommelförmigen Mittelteil 8 sind die Endteile 16, 17 stationär gehalten. Zur Drehung des trommelförmigen Mittelteiles 8 trägt dieser auf der Aussenseite nahe seinen axialen Enden je einen Laufring 6, mit denen ein Paar axial entsprechend beabstandete Rollenanordnungen 5 zusammenwirken, um den Reaktionsbehälter 2 drehbeweglich auf einer Unterlage, z.B. einem Fahrgestell 1 (vgl. Fig. 1) abzustützen. Der Antrieb zur Drehung des Reaktionsbehälters 2 kann über die Rollenanordnungen 5 oder in anderer Weise, z.B. durch einen Kettentrieb oder dgl., erfolgen.

Der trommelförmige Gehäuseteil 8 ist gegenüber den stationären Endteilen 16, 17 durch geeignete Dichtungen, wie bei 7 angedeutet, abgedichtet. Der trommelförmige Gehäuseteil 8 sowie die Endteile 16, 17 sind ferner vorzugsweise mit einem geeigneten wärmeisolierenden Material versehen.

Der Reaktionsbehälter 2 hat eine grössere Erstreckung in Längs- als in Durchmesserrichtung, wobei ein Verhältnis von Länge zu Durchmesser von 2:1 nicht unterschritten werden sollte. Vorzugsweise beträgt das Verhältnis grösser oder gleich 3:1.

Wie dargestellt, ist an der Innenseite des trommelförmigen Gehäuseteiles 8 eine geeignete Fördereinrichtung, z.B. in Gestalt einer Vielzahl in einem geeigneten umfänglichen und axialen Abstand voneinander angeordneter schaufelartiger Förderelemente 9 vorgesehen, die bei der Drehung des trommelförmigen Gehäuseteiles 8 eine Bewegung des darin befindlichen Gutes von der Einlassöffnung 3 zur Auslassöffnung 4 und gleichzeitig eine ständige Durchmischung des Gutes bewirken.

Vorgesehen sind ferner eine Vielzahl in axialem Abstand voneinander angeordnete Fühler 14, 14', 14'' zur Erfassung der Temperatur im Inneren des Reaktionsbehälters 2 an geeigneten Stellen längs dessen axialer Erstreckung.

Wie dargestellt, kann ferner der Auslassöffnung 4 des Reaktionsbehälters 2 eine Förderschnecke 10 zugeordnet sein, die in einem im stationären auslasseitigen Endteil 16 befestigten Gehäuse rotiert und das behandelte Gut der Auslassöffnung 4 zuliefert.

Ferner ist eine Einrichtung vorgesehen, um Frischluft ins Innere des Reaktionsbehälters 2 ein- und die Abluft daraus abzuführen. Obschon andere geeignete Einrichtungen verwendet werden können, dient diesem Zweck vorliegend eine axial längs des Inneren des Reaktionsbehälters 2 sich erstreckende Koaxialrohranordnung, bestehend aus einem äusseren Rohr 11 und einem koaxial in Abstand darin angeordneten inneren Rohr 13. Das äussere Rohr 11 weist eine Vielzahl umfänglich und axial beabstandete radiale Düsen 12 auf, mittels denen die Frischluft gleichmässig über eine wesentliche axiale Länge des Reaktionsbehälters 2 verteilt werden kann.

Das innere Rohr 13 der Koaxialrohranordnung hat einen inneren Abschnitt, der nach oben gebogen ist und eine Eintrittsöffnung 15 für die im Reaktionsbehälter befindliche Abluft aufweist, die nahe einem oberen Bereich des Behälterinneren ausmündet . Die Eintrittsöffnung 15 befindet sich vorzugsweise an einem axialen Zone (Zone III in Fig. 3) des Reaktionsbehälters 2, an der die Umwandlungsreaktion erfahrungsgemäss im wesentlichen abgeschlossen ist. Die warme Abluft durchströmt das innere Rohr 13 der Koaxialrohranordnung in Gegenrichtung zur Frischluft. Zwischen der Abluft und der Frischluft kann daher ein Wärmeaustausch stattfinden.

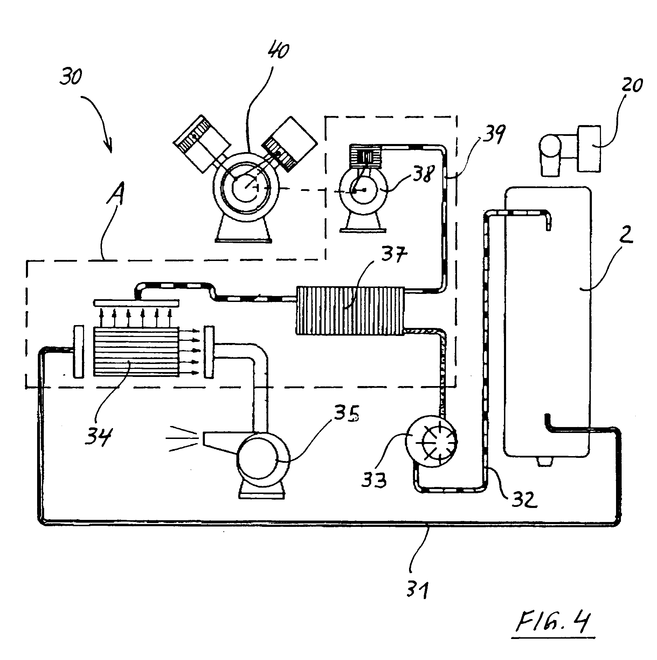

Das äussere Rohr 11 der Koaxialrohranordnung ist ausserhalb des Reaktionsbehälters 2 mit einer Frischluftzufuhrleitung 32 und das innere Rohr 13 mit einer Abluftleitung 31 verbunden. Die Leitungen 31 und 32 können mit einer in Fig. 4 gezeigten, das allgemeine Bezugszeichen 30 tragenden Einrichtung zur Erwärmung der Frischluft und zur Trocknung des zu behandelnden Gutes unter Ausnutzung von Prozesswärme in Verbindung stehen.

Die Erwärmungseinrichtung 30 besteht aus einem durch die gestrichelten Linien in Fig. 4 umrissenen Bereich A, der im wesentlichen eine Wärmepumpe darstellt und in an sich bekannter Weise einen Verdichter 38, einen Kondensator 37 und einen Verdampfer 34 umfasst, die durch eine Kältemittelleitung 39 in dieser Reihenfolge miteinander verbunden sind. Ein Gebläse 35 ist vorgesehen, ums die Abluft über die Leitung 31 anzusaugen und durch einen Verdampfer 34 zum Wärmeaustausch mit dem durch die Leitung 39 strömenden Kältemittel zu führen. Im Kondensator 37 erfolgt ein Wärmeaustausch des Kältemittels mit der Umgebungsfrischluft, die über ein Gebläse 33 in die mit dem äusseren Rohr 11 der Koaxialrohranordnung verbundene Leitung 32 gepumpt wird. Das Bezugszeichen 40 in Fig. 4 betrifft einen Motor, z.B. Verbrennungs- oder Elektromotor, zum Antrieb des Verdichters 38 und ggf. weiterer Aggregate der Umwandlungsvorrichtung.

Darauf hinzuweisen ist ferner, dass eine nicht gezeigte Abzweigung in der Leitung 32 vorgesehen sein kann, um die erwärmte Frischluft ganz oder teilweise auch ins Innere der Aufbereitungsvorrichtung 20 zu führen, und in ähnlicher Weise kann über eine Verbindung der Aufbereitungsvorrichtung 20 mit der Leitung 31 die Abluft daraus abgeführt werden.

Die Funktionsweise der, wie vorbeschrieben, aufgebauten Vorrichtung ist wie folgt.

### Aufbereitungsphase

Das über die Einfüllöffnung 21 der Aufbereitungsvorrichtung 20 eingegebene organische Gut mit unterschiedlicher Partikelgrösse wird durch die auf Schnellauf geschalteten Walzen des Mahl- und Mischwerkes 25 zerkleinert und sammelt sich im Sumpf 24 an. Aus dem Sumpf 24 wird das zerkleinerte Gut durch die Förderschnecke 26 kontinuierlich zum oberen Bereich des Gehäuses 23 gefördert, von wo es auf das Mahl- und Mischwerk 25 zurückfällt, solange die Auslassöffnung 22 verschlossen ist, um erneut am Zerkleinerungsprozess teilzunehmen, bis ein ausreichender geeigneter Zerkleinerungsgrad erzielt ist. Das an den Mahlwalzen gemessene Drehmoment ist dabei ein Mass für den erzielten Zerkleinerungsgrad.

Während dieses Prozesses kann in das Gehäuse 23 der Aufbereitungsvorrichtung 20 ständig erwärmte Frischluft eingeführt werden, so dass die Zerkleinerung mit einer gleichzeitigen beginnenden Umwandlung der organischen Stoffe in Biomasse einhergeht. Die Erwärmung und Zufuhr der Frischluft kann in ähnlicher Weise erfolgen, wie dies in Verbindung mit Fig. 2 und 4 beschrieben wurde.

Sobald anhand der Drehmomentenmessung festgestellt wird, dass der gewünschte Zerkleinrungsgard erreicht ist, wird ein Befehl an eine Steuereinrichtung (nicht gezeigt) geliefert, um die Drehzahl der Mahlwalzen des Mahl- und Mischwerkes 25 herabzusetzen, so dass die Mahlwalzen danach überwiegend als Rührwerk zur innigen Durchmischung des zerkleinerten Gutes wirken. Unter weiterer Zufuhr erwärmter Frischluft setzt sich die Umwandlungsreaktion während dieser Phase der Aufbereitung fort.

### Hauptumwandlungsphase

Aufgrund eines aus der Messung der Temperatur im Inneren des Reaktionsbehälters 2 abgeleiteten Signales liefert die Steuereinrichtung ein Befehlssignal zum Öffnen der Auslassöffnung 22 der Aufbereitungsvorrichtung 20, so dass ein Teil des darin befindlichen zerkleinerten, durchmischten und ggf. teilweise schon umgewandelten Gutes durch die Förderschnecke 26 in die Einlassöffnung 3 des Reaktionsbehälters 2 bewegt werden kann. Der Reaktionsbehälter 2 sollte nicht vollständig, sondern vorzugsweise nur bis maxiaml 75 % seines Volumens mit Gut gefüllt werden.

Durch die Drehbewegung des Reaktionsbehälters 2 wird das eingegebene Gut infolge der Wirkung der Förderelemente 9 langsam in Richtung auf die Auslassöffnung 4 des Reaktionsbehälters 2 transportiert und dabei ständig durch die Förderelemente 9 umgewendet und durchgemischt. Gleichzeitig wird während dieses Vorganges über die Koaxialrohranordnung vorgewärmte Frischluft ins Innere des Reaktionsbehälters 2 geleitet.

Für die Umwandlungsreaktion im Inneren des Reaktionsbehälters 2 sind drei Zonen I bis III (Fig. 3) mit unterschiedlicher Temperatur kennzeichnend. In einer ersten Zone I nahe der Einlassöffnung 3 herrscht eine relativ niedrige Temperatur, in einer zwischenliegenden Zone II (Hauptreaktionszone) erreicht die Temperatur einen maximalen Wert, und in einer Zone III nahe der Auslassöffnung 4 des Reaktionsbehälters 2 fällt die Temperatur wieder auf einen niedrigeren Wert ab. Insbesondere der Abfall der Temperatur in der Zone III gegenüber einer maximalen Reaktionstemperatur in der Zone II zeigt an, dass die Umwandlung im wesentlichen abgeschlossen ist, d.h. sich in der Zone III im wesentlichen nur noch Biomasse befindet. Die Steuerung der Drehgeschwindigkeit des Reaktionsbehälters 2 und der Zu- und Abfuhr von Gut bzw. Biomasse erfolgt in Abhängigkeit von den in den Zone II und III gemessenen Temperaturen unter Optimierung der Umwandlungsbedingungen insbesondere in der Hauptreaktionszone II. Als weiteres Steuerungskriterium kann der Zerkleinerungsgrad des aufbereiteten Gutes herangezogen werden.

Wie erwähnt, kann die Frischluftzufuhr in den Reaktionsbehälter 2 vorzugsweise mit Überschuss erfolgen. Die überschüssige Luft zusammen mit eventuell im Behälterinneren als Folge der Umwandlungsreaktion gebildeten Gasen wird über das innere Rohr 13 der Koaxialrohranordnung abgeführt. Die Wärme der Abluft kann dabei zur Erwärmung der Frischluft mittels der in Verbindung mit Fig. 4 beschriebenen Wärmerückgewinnungseinrichtung 30 ausgenutzt werden. Gleichzeitig dient die Abluft zum Abtransport von Feuchtigkeit aus dem Inneren des Reaktionsbehälters 2 und damit zur Trocknung des darin befindlichen Gutes.

Die erfindungsgemässe Vorrichtung ermöglicht einen im wesentlichen kontinuierlichen Betrieb mit verkürzter Umwandlungszeit, da die Zeit für die Startphase wegfällt, die bislang mit der Umwandlung chargeweise zugeführten Gutes in einem Reaktionsbehälter benötigt wurde, und ferner die Umwandlungsreaktion kontinuierlich optimiert werden kann.

Bei der vorbeschriebenen Prozessführung ist vorgesehen, dass die eigentliche Umwandlung des Gutes in Biomasse im Reaktionsbehälter stattfindet. Versuche haben jedoch gezeigt, dass schon während der Aufbereitungsphase eine Umwandlung ggf. bis zu einer Stufe erfolgen kann, die eine nachfolgende Behandlung des Materials im Reaktionsbehälter überflüssig macht. Die Aufbereitungsvorichtung alleine kann daher ebenfalls zur Herstellung von Biomasse herangezogen werden.

Obschon die Erfindung anhand einer mobilen Anlage mit im wesentlichen waagerecht angeordnetem Reaktionsbehälter beschrieben wurde, versteht es sich, dass sie hierauf nicht beschränkt ist. Vielmehr könnte unter entsprechender Modifikation der Misch- und Förderelemente auch eine vertikale oder geneigte Anordnung des Reaktionsbehälters vorgesehen werden. Ferner lässt sich das erfindungsgemässe Konzept vorteilhaft auch bei stationären Grossanlagen anwenden.

## Patentansprüche

1. Verfahren zur biologischen Umwandlung organischer Stoffe in Biomasse, bei dem die organischen Stoffe in zerkleinerter Form in einen drehbaren Reaktionsbehälter eingegeben und darin unter Frischluftzufuhr und kontinuierlicher Vermischung eine Zeitlang bewegt werden, wobei die organischen Stoffe vor der Eingabe in den Reaktionsbehälter in einem im wesentlichen geschlossenen Gehäuse durch Feinzerkleinern und Vermischen unter Frischluftzufuhr aufbereitet werden, so dass während der Aufbereitung eine teilweise Umwandlung der Stoffe erfolgen kann, und wobei die Zu- und Abfuhr der aufbereiteten organischen Stoffe bzw. der Biomasse in bzw. aus dem Reaktionsbehälter in Abhängigkeit von dessen Drehgeschwindigkeit und einer für den Ablauf der Umwandlungsreaktion kennzeichnenden Temperaturbedingung im Reaktionsbehälter gesteuert wird.

2. Verfahren nach Anspruch 1, dadurch gekennzeichnet, dass ferner die Zufuhr der aufbereiteten organischen Stoffe in den Reaktionsbehälter in Abhängigkeit vom Zerkleinerungsgrad gesteuert wird.

3. Verfahren nach Anspruch 1 oder 2, dadurch gekennzeichnet, dass die Zu- und Abfuhr der aufbereiteten organischen Stoffe bzw. Biomasse in bzw. aus dem Reaktionsbehälter erfolgen, wenn in einer Entnahmezone (Zone III) eine bestimmte niedrigere Temperatur gegenüber einem Temperaturmaximum an einer zwischenliegenden Reaktionszone (Zone II) des Reaktionsbehälters ermittelt wird.

4. Vorrichtung zur biologischen Umwandlung organischer Stoffe in Biomasse mit einem Reaktionsbehälter mit axial beabstandeten Ein- und Auslassöffnungen, einer Einrichtung zur Bewegung der organischen Stoffe unter kontinuierlicher Mischung von der Ein- zur Auslassöffnung, Sensoren (14) zur Erfassung der Temperatur an einer Vielzahl axial beabstandeter Stellen im Inneren des Reaktionsbehälters, sowie einer dem Reaktionsbehälter (2) vorgeschalteten Vorrichtung (20) mit einem im wesentlichen geschlossenen Gehäuse (23) und einer Misch- und Zerkleinerungseinrichtung (25) zum Aufbereiten der organischen Stoffe, einer Einrichtung (11) zur Zufuhr von Frischluft in den Reaktionsbehälter und die Aufbereitungsvorrichtung, und einer Einrichtung zur Steuerung der Zu- und Abfuhr der aufbereiteten organischen Stoffe bzw. der Biomasse in bzw. aus dem Reaktionsbehälter (2) in Abhängigkeit von dessen Drehgeschwindigkeit und einer aus den Ausgangssignalen der Sensoren (14) ermittelten, für den Ablauf der Umwandlungsreaktion kennzeichnenden Temperaturbedingung im Reaktionsbehälter.

5. Vorrichtung nach Anspruch 4, dadurch gekennzeichnet, dass die Aufbereitungsvorrichtung (20) und der Reaktionsbehälter (2) getrennte Baueinheiten sind.

6. Vorrichtung nach Anspruch 4 oder 5, gekennzeichnet durch Anordnung des Reaktionsbehälters (2) und der Aufbereitungsvorrichtung (20) auf einem gemeinsamen Fahrgestell (1) oder auf getrennten Fahrgestellen.

7. Verfahren zur Aufbereitung und wenigstens teilweisen biologischen Umwandlung organischer Stoffe in Biomasse, bei dem die organischen Stoffe in einem im wesentlichen geschlossenen, stationären und wärmeisolierten Gehäuse einer Misch- und Zerkleinerungsbehandlung unter Zufuhr von Frischluft unterzogen werden, wobei wenigstens ein Teil des zerkleinerten Gutes zwischen einem Bereich des Gehäuses auf einem tieferen Niveau und einem Bereich des Gehäuses auf einem höheren Niveau in Umlauf gehalten wird, und wobei das Mischen und Zerkleinern im Bereich des Gehäuses tieferen Niveaus erfolgt, während das Gut bei Erreichen des Bereiches höheren Niveaus frei im Gehäuse zu dessen Bereich tieferen Niveaus zurückfallen gelassen wird.

8. Verfahren nach Anspruch 1 oder 7, dadurch gekennzeichnet, dass die Frischluft im erwärmten Zustand zugeführt wird.

9. Verfahren nach Anspruch 8, dadurch gekennzeichnet, dass die Frischluft durch wenigstens teilweise Rückgewinnung von Prozesswärme erwärmt wird.

10. Verfahren nach einem der Ansprüche 1, 7, 8 oder 9, dadurch gekennzeichnet, dass die Frischluft mit Überschuss zugeführt und Feuchtigkeit aus dem Inneren des Gehäuses mit der Abluft heraustransportiert wird.

11. Vorrichtung zur Aufbereitung und wenigstens teilweisen biologischen Umwandlung organischer Stoffe in Biomasse, mit einem im wesentlichen geschlossenen, stationären und wärmeisolierten Gehäuse (23), einer Einrichtung zur Zufuhr von Frischluft in Innere des Gehäuses, einer im Bereich des bodenseitigen Sumpfes (24) des Gehäuses vorgesehenen Misch- und Zerkleinerungseinrichtung (25), und einer Fördereinrichtung (26) zum Transport des Gutes zwischen dem Sumpf und einem Bereich des Gehäuses auf einem höheren Niveau als der Sumpf, wobei die Fördereinrichtung ausgelegt ist, dass das Gut bei Erreichen des Gehäusebereiches höheren Niveaus in den Sumpf zurückfällt.

12. Vorrichtung nach Anspruch 11, dadurch gekennzeichnet, dass die Misch- und Zerkleinerungseinrichtung ein Paar mit variabler Geschwindigkeit antreibbare Mahlwalzen (25) mit Fördereigenschaft umfasst, deren Förderrichtung entgegengesetzt ist.

## Claims

1. Method for biologically converting organic substances into a bio-mass in which the organic substances are fed in a crushed form into a rotatable reaction container and are agitated therein for a period of time whilst being continuously mixed and at the same time adding fresh air, wherein prior to being fed into the reaction container the organic substances are treated in a substantially closed housing by virtue of being finely crushed and mixed whilst adding fresh air, so that the substances are partially converted during the treatment process and wherein the addition and extraction of the treated organic substances or of the bio-mass into or out of the reaction container is controlled in dependence upon its rotational speed and upon a temperature condition in the reaction container which is characterising for the operating sequence of the conversion reaction.

2. Method according to claim 1, characterised in that moreover the addition of the treated organic substances into the reaction container is controlled in dependence upon the extent to which the substance has been crushed.

3. Method according to claim 1 or 2, characterised in that the addition and extraction of the treated organic substance or bio-mass into or out of the reaction container occurs if in an extraction region (Region III) a predetermined low temperature with respect to a maximum temperature is determined in an intermediate reaction region (Region II) of the reaction container.

4. Apparatus for biologically converting organic substances into a bio-mass having a reaction container with axially spaced inlet and outlet ports, a device for agitating the organic substances whilst continuously mixing from the inlet port to the outlet port, sensors (14) for detecting the temperature at a plurality of axially spaced points in the inside of the reaction container, as well as apparatus connected in advance of the reaction container (2) having a substantially closed housing (23) and a mixing and crushing device (25) for treating the organic substances, a device (11) for adding fresh air into the reaction container and the treatment device and a device for controlling the addition and extraction of the treated organic substances or of the bio-mass into or out of the reaction container (2) in dependence upon its rotational speed and a temperature condition in the reaction container, which temperature condition is characterising for the operating sequence of the conversion reaction and which is determined from the output signals of the sensors (14).

5. Apparatus according to claim 4, characterised in that the treatment device (20) and the reaction container (2) are separate components.

6. Apparatus according to claim 4 or 5, characterised by arranging the reaction container (2) and the treatment device (20) on a common underframe (1) or on separate underframes.

7. Method for treating and at least partially biologically converting organic substances into a bio-mass in which the organic substances are mixed and crushed in a substantially closed, stationary and heat-insulated housing whilst adding fresh air, wherein at least one part of the crushed material is kept in circulation between one region of the housing at a lower level and in one region of the housing at a higher level and wherein the mixing and crushing process occurs in the region of the housing at the lower level, whereas the material upon arriving at the region of the higher level is allowed to fall back freely in the housing to the region of the housing at the lower level.

8. Method according to claim 1 or 7, characterised in that the fresh air is added in a warm condition.

9. Method according to claim 8, characterised in that the fresh air is heated by at least partially recycling the process heat.

10. Method according to any of the claims 1, 7, 8 or 9, characterised in that the fresh air is added in excess and moisture is transported away from the inside of the housing together with the exhaust air.

11. Apparatus for treating and at least partially biologically converting organic substances into a bio-mass, having a substantially closed, stationary and heat-insulated housing (23), a device for adding fresh air to the inside of the housing, a mixing and crushing device (25) which is provided in the region of the base-side sump (24) of the housing and a conveying device (26) for transporting the material between the sump and a region of the housing at a higher level than the sump, wherein the conveying device is designed in such a way that upon arriving at the housing region at the higher level the material falls back into the sump.

12. Apparatus according to claim 11, characterised in that the mixing and crushing device comprises a pair of grinding rollers (25) which are driven at a variable rate and which have a conveying characteristic, in that they convey in opposite directions.

## Revendications

1. Procédé de transformation biologique en biomasse de substances organiques, dans lequel les substances organiques sont introduites sous forme fragmentée dans un récipient de réaction rotatif et y sont maintenues en mouvement pendant un certain temps avec adduction d'air frais et mélange continuel, dans lequel les substances organiques sont traitées avant l'introduction dans le récipient de réaction dans un boitier essentiellement fermé par fragmentation fine et mélange avec adduction d'air frais de façon que, pendant cette préparation, une transformation partielle des substances puisse se produire et dans lequel l'adduction et l'évacuation des substances organiques traitées ou de la biomasse entrant ou sortant du récipient de réaction sont commandées en fonction de la vitesse de rotation de celui-ci et pour une condition de température dans le récipient de réaction caractérisant la réaction de transformation.

2. Procède selon la revendication 1,caractérisé en ce que, en outre, l'adduction des substances organiques traitées dans le récipient de réaction est commandée en fonction du degré de fragmentation.

3. Procédé selon la revendication 1 ou 2, caractérisé en ce que l'adduction et l'évacuation des substances organiques traitées ou de la biomasse dans ou hors du récipient de réaction ont lieu si, dans une zone de prélèvement (zone III) on a mesuré une température déterminée inférieure à une température maximale dans une zone de réaction intermédiaire (zone II) du récipient de réaction.

4. Dispositif de conversion biologique de substances organiques en biomasse avec un récipient de réaction avec des orifices d'entrée et de sortie écartées axialement l'un de l'autre, un dispositif pour mettre en mouvement les substances organiques avec mélange continuel de l'orifice d'entrée vers l'orifice de sortie, des détecteurs (14) pour déterminer la température à un grand nombre d'endroits écartés axialement les uns des autres à l'intérieur du récipient de réaction, ainsi qu'un dispositif (20) précédent le récipient de réaction (52) avec un boîtier (23) essentiellement fermé et un dispositif (25) de mélange et de fragmentation pour traiter les substances organiques, un dispositif (11) pour l'adduction d'air frais dans le récipient de réaction et le dispositif de traitement, et un dispositif pour commander l'adduction et l'évacuation des substances organiques traitées ou de la biomasse dans et hors du récipient de réaction (2) en fonction de la vitesse de rotation de celui-ci et d'une condition de température dans le récipient de réaction déterminée d'après les signaux de sortie des détecteurs (14) et caractéristique du déroulement de la réaction de conversion.

5. Dispositif selon la revendication 4, caractérisé en ce que le dispositif de traitement (20) et le récipient de réaction (2) constituent deux unités constructives séparées.

6. Dispositif selon la revendication 4 ou 5, caractérisé par le montage du récipient de réaction (2) et du dispositif de traitement (20) sur un châssis (1) commun ou sur des châssis de véhicule séparés.

7. Procédé de traitement et de conversion biologique au moins partielle de substances organiques en biomasse, dans lequel les substances organiques sont soumises, dans un boîtier essentiellement fermé, fixe et isolé thermiquement, à un traitement de mélange et de fragmentation avec adduction d'air frais, dans lequel au moins une partie des produits fragmentés est maintenue en circulation entre une zone du boîtier à un niveau inférieur et une zone du boîtier à un niveau supérieur et dans lequel le mélange et la fragmentation se produisent dans la zone du boîtier de niveau inférieur tandis que, lorsque le produit a atteint la zone de niveau supérieur, il peut retomber librement dans le boîtier vers la zone de celui-ci à un niveau inférieur.

8. Procédé selon la revendication 1 ou 7, caractérisé en ce que l'air frais est introduit à l'état chauffé.

9. Procédé selon la revendication 8,caractérisé en ce que l'air frais est chauffé au moins partiellement par la récupération de la chaleur du procédé.

10. Procédé selon l'une des revendications 1, 7, 8 ou 9, caractérisé en ce que l'air frais est amené en excès et que l'humidité provenant de l'intérieur du boîtier est évacuée avec l'air rejeté à l'extérieur.

11. Dispositif pour traiter et convertir biologiquement, au moins partiellement, des substances organiques en biomasse avec un boîtier (23) essentiellement fermé, fixe et isolé thermiquement, un dispositif pour l'adduction d'air frais à l'intérieur du boîtier, un dispositif (25) de mélange et de fragmentation prévu dans la zone de la cuve située du côté du fond du boîtier et un dispositif de transport (26) pour transporter le produit entre la cuve et une zone du boîtier à un niveau supérieur à celui de la cuve, tandis que le dispositif de transport est conçu de façon que, lorsque le produit a atteint la zone du boîtier à un niveau supérieur, il retombe dans la cuve.

12. Dispositif selon la revendication 11, caractérisé en ce que le dispositif de mélange et de fragmentation comprend une paire de cylindres de broyage (25) pouvant être entraînés à vitesse variable avec des caractéristiques de transport mais avec des directions de transport en sens opposé.
